# EUROPEAN PATENT SPECIFICATION

(11) **EP 0 394 683 B1**
(45) Date of publication and mention of the grant of the patent: **15.12.1993**
(21) Application number: 90105754.7
(22) Date of filing: 27.03.1990
(51) Int. Cl.: B60K 17/24, F16C 19/16, F16C 33/78

(54) **Bearing with seal for motor vehicles driving shafts**
Lager mit Dichtung für Antriebswellen in Kraftfahrzeugen
Palier avec dispositif d'étanchéité pour arbres de transmission de véhicules à moteur

(30) Priority: 28.04.1989 IT 5304989 U
(43) Date of publication of application: 31.10.1990
(73) Proprietor: SKF INDUSTRIE S.P.A., I-10123 Torino (IT)
(72) Inventor: Vignotto, Angelo, I-10134 Torino (IT); Viazzi, Roberto, I-10139 Torino (IT)
(74) Representative: Lotti, Giorgio

(56) References cited:
- EP-A- 0 291 104
- DE-A- 1 944 919
- FR-A- 1 336 286
- GB-A- 899 511
- US-A- 3 469 892

## Description

The invention refers to a bearing with seal for motor vehicles driving shafts.

Motor vehicles axle shafts, particularly differential axle shafts, carry an elastic casing having the task of avoiding oil leakages to the exterior and preventing the penetration of external agents, such as dust, soil and mud, among the mechanical elements to which the axle shaft is connected.

One end of said casing is connected to a fixed point and the other end is wound on a ground section of the shaft, and a seal is interposed.

Between the seal and the casing a bushing is usually assembled, extending on the shaft from the inner part with respect to the casing.

The shaft is subjected to movements of various types during motion, oscillating and translating, therefore the bushing and the seal slide continuously on the ground section where they are assembled, which by and by gets soiled by external agents. Frictions are thus created causing progressive wear of said reciprocally sliding elements and of the seal above all, causing oil leakages to the exterior and penetration of external agents over the casing.

An embodiment able to avoid said inconveniences assembles the seal between the inner and outer race of a bearing and the latter one on a bush keyed on the shaft. Therefore, this unit remains stationary on the enlarged and ground section of the shaft during its oscillations and translations and the casing consequently fitting itself to them; this solution, however, requires the employment of an additive element (the bush) and high precision processing on the reciprocally assembled elements.

Oil leakages may in any case occur during operation between the inner race of the bearing and the bush, due to the wear of said elements.

The Italian patent application No. 53299 B/87 of May 11, 1987, by the same Company, (EP-A-291104) proposes another embodiment where the seal and the bearing are stationary on the shaft, without interposition of further elements, thus simplifying the manufacture of the unit and avoiding the risk of oil leakages and the necessity of effecting expensive and complex processings of the various elements of the unit.

However, in said embodiment the inner bearing race was directly keyed on an enlarged shaft section, properly dimensioned and ground to support bearing and seal; the traditional particular processing on the shaft was therefore required.

A protection device for axle shaft linkages, is known from Patent application FR-A-1336286. In this document, the inner race of a ball bearing is obtained in the joint of a revolving shaft, while the outer race is constituted by a plastic ring that performs a seal on one side and is carried by a casing. Therefore, the body of the joint has to be especially manufactured so as to form said inner race. The device also needs an additional ring to perform sealing action on the other side.

It is a purpose of this invention to propose a bearing with seal that may be keyed directly on any section of the shaft, without diameter variation.

A further purpose of this invention is to propose a unit where the outer bearing race is manufactured in plastic material so as to form, possibly, a whole body with the casing, reducing further the costs of production and assembly of the unit on the shaft.

For these purposes and further ones which will be better appreciated as the description follows, the invention proposes a bearing with seal for motor vehicle driving shafts, of the type in which a rolling bearing is joined to the seal and both are interposed between a casing and a shaft, the outer race of the bearing being made of stiff plastic material forming the supporting element of the seal and of the casing; characterised in that a metal ring is driven directly on the shaft and simultaneously forms the inner race of the bearing and the surface on which the tightening action of the seal is exerted.

Two alternative types of embodiments of the unit of the invention, which are equally useful as they apply the same innovating concept, are now being described.

With reference to the attached drawings, it may be observed that:
Fig. 1 is the axial view of the shaft where a first embodiment of the unit is assembled;
Fig. 2 is the enlarged view of the unit of Fig. 1;
Fig. 3 illustrates the unit as in Fig. 1 but in a second type of embodiment;
Fig. 4 is the enlarged view of the unit of Fig. 3.

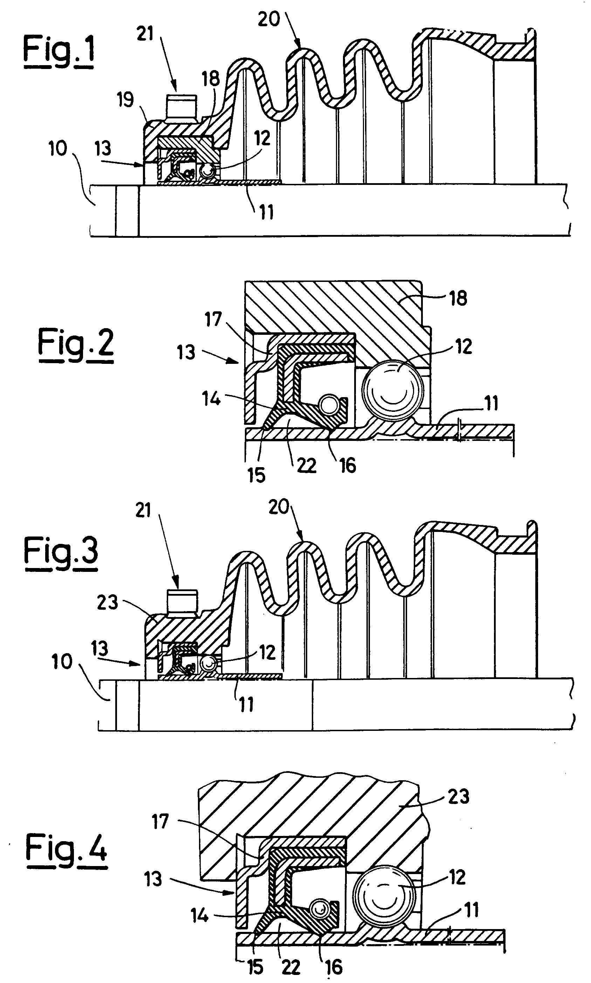

A driving shaft on which the inner race 11 of the bearing is driven may be observed in Fig. 1 and 2.

Part of the race 11 supports the balls 12 of the bearing and part supports the seal 13. The latter is formed by a traditional sealing ring 14, equipped with lips 15 and 16 pressing on the race 11 of the bearing.

A sleeve 17 protects the seal externally and is interposed between it and the plastic outer race 18 of the bearing.

Said race 18 is shaped to be externally fitted by the end 19 of a casing 20; a clamp 21 is applied around the end 19 keeping it locked in this position on the race 18.

As the inner race 11 is driven on the shaft 10, the seal 13 - bearing 11, 12, 18 unit is axially locked to avoid wear of the inner race 11 and oil leakages to the exterior of the unit.

Seal 13 avoids soil penetration from the exterior thanks to the first barrier made by the sleeve 17 and, above all, by the lips 15 and 16, between which grease 22 is inserted in known way. The outer race 18, made in plastic material, may easily and economically be shaped to follow any outline of the seal 13 and of the end 19 of the casing 20, realizing the optimum for reciprocal coupling and the seal of the unit.

The embodiment illustrated in Fig. 3 and 4 has the same reference numbers for the elements and parts of the first embodiment illustrated in Fig. 1 and 2.

The only difference is that the end 19 of casing 20 and race 18 of the bearing are a whole piece 23, made obviously in plastic material sufficiently stiff to form a supporting ring of the seal 13 and of the balls 12, and in the meantime suitable to be made in a whole piece or to be welded to casing 20 during pressing.

The production costs of the unit and its assembly on the shaft 10 are in this way further reduced, and the required seal and unsliding features are maintained.

Finally, if the race 18 and the end 19 of the casing 20 are realized in one piece, it may be unnecessary to fit clamp 21 as the stiff coupling between casing and bearing must not be maintained any more as the first is now integrating part of the second.

## Claims

1. A bearing with seal for motor vehicle driving shafts, of the type in which a rolling bearing is joined to the seal (13) and both are interposed between a casing (20) and a shaft (10), the outer race (18,23) of the bearing being made of stiff plastic material forming the supporting element of the seal (13) and of the casing (20); characterised in that a metal ring (11) is driven directly on the shaft (10) and simultaneously forms the inner race of the bearing and the surface on which the tightening action of the seal (13) is exerted.

2. A bearing according to claim 1 characterised in that the casing (20) forms directly the outer race (23) which is adjacent to the seal (13).

## Patentansprüche

1. Lager mit Dichtung für Antriebswellen in Kraftfahrzeugen, in welchem ein Kugellager mit der Dichtung (13) verbunden ist und beide zwischen einem Gehäuse (20) und einer Welle (10) zwischengeschaltet sind, wobei der Außenring (18, 23) des Lagers aus steifem Kunststoffmaterial besteht und den tragenden Teil der Dichtung (13) und des Gehäuses (20) bildet,
dadurch gekennzeichnet,
daß ein Metallring (11) unmittelbar auf der Welle (10) angebracht ist, welcher gleichzeitig den Innenring des Lagers und die Fläche bildet, auf welche die Dichtwirkung der Dichtung (13) ausgeübt wird.

2. Lager gemäß Anspruch 1,
dadurch gekennzeichnet,
daß das Gehäuse (20) den zur Dichtung (13) benachbarten Außenring (23) unmittelbar bildet.

## Revendications

1. Palier avec joint pour arbres d'entraînement de véhicules à moteur du type dans lequel un roulement à billes est accolé au joint (13) et l'ensemble comprenant ces deux éléments est interposé entre un carter (20) et un arbre (10), la piste extérieure de roulement (18, 23) du roulement à billes étant en matière plastique rigide et servant d'élément de support pour le joint (13) et le carter (20) ; ledit palier étant caractérisé par le fait qu'une bague métallique (11) est entraînée directement sur l'arbre (10) et forme à la fois la piste intérieure de roulement du roulement à billes et la surface sur laquelle s'exerce l'action de serrage du joint (13).

2. Palier selon la revendication 1, caractérisé par le fait que le carter (20) forme directement la piste extérieure de roulement (23) adjacente au joint (13).
